# EUROPÄISCHE PATENTSCHRIFT

(11) **EP 2 570 247 B1**
(45) Veröffentlichungstag und Bekanntmachung des Hinweises auf die Patenterteilung: **28.03.2018**
(21) Anmeldenummer: 11007616.3
(22) Anmeldetag: 19.09.2011
(51) Int. Cl.: B29B 9/16, B29B 13/06, C08G 63/90, F26B 17/14, B29K 67/00, B29B 9/06

(54) **Trocknungs-/Entgasungsvorrichtung sowie Vorrichtung und Verfahren zur direkten Herstellung von Formkörpern aus Polyesterschmelzen**
Drying/ gas removal device and device and method for direct production of mouldings made of polyester melts
Dispositif de séchage/dégazage ainsi que dispositif et procédé de fabrication directe de corps moulés à partir de masses de polyester en fusion

(43) Veröffentlichungstag der Anmeldung: 20.03.2013
(73) Patentinhaber: Uhde Inventa-Fischer GmbH, 13509 Berlin (DE)
(72) Erfinder: Hittorff, Martin, 7402 Bonaduz (CH); Koch, Heinrich, 14532 Kleinmachnow (DE)
(74) Vertreter: Pfenning, Meinig & Partner mbB

(56) Entgegenhaltungen:
- WO-A1-2006/133469
- DE-A1-102007 040 135

## Beschreibung

Die vorliegende Erfindung betrifft eine Trocknungs-/Entgasungsvorrichtung zur Trocknung bzw. Entgasung eines Polyestergranulats, die über eine Temperierungszone, eine Kühlzone, einen Einlass und einen Auslass für Polyestergranulat sowie zusätzlich eine separate Entnahmemöglichkeit zur Entnahme von heißem Polyestergranulat verfügt. Zudem betrifft die vorliegende Erfindung eine Vorrichtung zur direkten Herstellung von Formkörpern aus Polyesterschmelzen, die die erfindungsgemäße Trocknungs-/Entgasungsvorrichtung umfasst. Die vorliegende Erfindung beschreibt zudem ein Verfahren zur Herstellung von Formkörpern aus Polyestern.

In der US 4,064,112 wird die thermische Schädigung beschrieben, die sich früher bei der Schmelzekondensation bei einer intrinsischen Viskosität von mehr als 0,7 dl/g einstellte. Deshalb wird heute das weitverbreitete Verfahren einer Festphasennachkondensation in einem Inertgasstrom im Schachtreaktor bei ca. 220 °C verwendet. Beschrieben ist auch, wie das Restwasser aus der Granulierung oder durch Hygroskopie vom Polyester aufgenommenes Wasser entfernt werden muss. Dazu wird vor die Festphasennachkondensation eine Trocknung durchgeführt. Desweiteren ist beschrieben, wie die beim Aufheizen sich einstellende Verklebung bei der Kristallisation durch Bewegung vermieden werden muss. US 4,064,112 beschreibt auch die Entfernung von leichtflüchtigen Nebenprodukten in einer Festphasennachkondensation (Dealdehydisierung).

In EP 1 608 696 wird die Latentwärmekristallisation beschrieben. Bei diesem Verfahren wird das Granulat nur so weit gekühlt, dass nach der Entfernung des Kühlwassers mit einer Rührzentrifuge die im Korn verbleibende inhärente Wärme direkt zur Kristallisation verwendet werden kann. Ziel ist es, mit einer der Rührzentrifuge nachgeschalteten Rüttelrinne Verklebungen zu vermeiden. Das Verfahren dient dazu, einen angestrebten Kristallisationsgrad für die Weiterverarbeitung zu erreichen. Es zeigte sich später, dass auch ohne Rüttelbett keine Verklebungen auftreten (vgl. Patentschrift DE 103 49 016 mit der später folgenden Offenlegungsschrift DE 10 2006 013 062).

In einem weiteren Schritt zur Prozessintensivierung wird in WO 2006/06030 ein Verfahren dargestellt, bei dem in einer Schmelzepolykondensation hohe intrinsische Viskosität erreicht wird, wobei durch geschickte Prozessführung ein geringerer Gehalt an Acetaldehyd erreicht wird. Damit konnte erstmals Flaschengranulat im industriellen Maßstab ohne Festphasennachkondensation hergestellt werden. Für dieses sog. "Melt-To-Resin"-Verfahren (MTR®) wurde die Latentwärmegranulierung eingesetzt. Neu wurde die im Granulat verbleibende inhärente Wärme und die generierte Kristallisationswärme direkt genutzt zur Reduktion des Acetaldehydgehalts durch eine thermische Behandlung mit Luft bei 175 °C. Ein Viskositätsanstieg wurde nicht angestrebt.

In der US 7,674,878 ist ein Latentwärmegranulierverfahren beschrieben, bei dem durch eine Schockkühlung ein nichtklebendes Granulat für eine Weiterverarbeitung auf einem kontrollierten Temperaturniveau zur Verfügung gestellt wird.

Ein Viskositätsabbau durch Feuchte nach der Rührzentrifuge in dem oben beschriebenen MTR®-Verfahren muss vermieden werden. Das Resultat einer weiteren Entwicklung ist in WO 2009/027 064 festgehalten. Darin wird eine verbesserte Rührzentrifuge vorgestellt, die sich durch einen tangentialen Eintritt des Granulat-Wasser-Gemischs in die Rührzentrifuge auszeichnet. Der Durchmesser der Rührzentrifuge ist nach oben erweitert. Nach der Hauptentwässerung im unteren Teil wird das Restwasser mit erhöhtem Durchmesser abgeschleudert. Der Dampfabzug wird durch zentral eingespeiste Luft unterstützt. Auch am Granulataustritt und den folgenden Silos wird trockene Luft im Gegenstrom gefahren, um das Mitschleppen von Feuchte in die thermische Weiterverarbeitung (Dealdehydisierung) zu vermeiden. Ein Viskositätsabbau durch Hydrolyse kann so weitgehend vermieden werden.

In der US 5,292,865 sind wesentliche Elemente eines Verfahrens mit Schmelzepolykondensation und Dealdehydisierung beschrieben. Die Behandlung mit trockener Luft und ein sich dabei einstellender Viskositätsanstieg bei 170 bis 185 ° C bei einer Behandlungszeit von 10 bis 12 Stunden sind festgehalten. Außerdem wird ein Latentwärmekristallisationsverfahren beschrieben, bei welchem das bei anderen Kristallisationsverfahren problematische Verkleben nicht auftritt. Die für die industrielle Nutzung entscheidende Darstellung einer temperaturkontrollierten Latentwärmekristallisation, welche auch für kleines Korn ein optimales Betriebsfenster für die Dealdehydisierung zulässt, ist in diesem Patent aber nicht beschrieben. Das Granulat muss nach diesem Verfahren erst aufwändig getrocknet werden, damit ein Viskositätsaufbau stattfindet, der den Viskositätsabbau durch Hydrolyse überwiegt.

In der US 2007/0248778 A1 wird ein Verfahren zur Herstellung von PET-Pellets und weiter zur Herstellung von PET-Preforms und PET-Flaschen beschrieben, das sich durch einen geringen Viskositätsabbau bei den Verfahrensschritten Pellet-Trocknung und Preform-Herstellung auszeichnet.

In der Offenlegungsschrift DE 10 2004 015 515 A1 wird die Latentwärmekristallisation von Polyester und die besonderen Eigenschaften der Polyester-Pellets beschrieben in Bezug auf den Kristallisationsgrad, die Größenverteilung von Kristall-Sphärolithen über einen Schnitt durch ein Polyester-Pellet und die Aufschmelzenergie der Polyester-Pellets. Dabei werden drei Varianten beschrieben:
- Überführung von Pellets ohne Additivierung und ohne Abkühlung von der Granulatherstellung zu einem Festphasennachkondensationsreaktor;
- Überführung von Pellets ohne Additivierung in eine Dealdehydisierungsstufe unter Stickstoffatmosphäre;
- Überführung der Polyester-Schmelze mit Additivierung zur Reduzierung des Acetaldehyd-Gehalts und direkte Weiterverarbeitung zu Preforms.

In WO 2005/035608 A2 ist die konventionelle Polykondensation von Polyester mit der Herstellung von PET-Pellets in einem Strang-Granulierprozess dargestellt. Im Unterschied zu herkömmlichen Verfahren werden die PET-Pellets auf ca. 70 °C abgekühlt, anstatt auf 20 bis 30 °C. In jedem Fall werden die PET-Pellets bis auf eine Temperatur unterhalb des Glasumwandlungspunkts (76 °C) abgekühlt. Die PET-Pellets werden einer konventionellen Festphasennachkondensationsreaktion unterzogen. In WO 2006/133469 A1 ist eine Vorrichtung nach dem Oberbegriff des Anspruchs 1 und ein Verfahren zur Herstellung von Formkörpern offenbart.

Den etablierten Verfahren müssen diverse wirtschaftliche und qualitative Nachteile zugeschrieben werden:

### 1. Energie und Investitionsaufwand für die Abkühlung von Polyester-Pellets

Nach Abschluss der Pellet-Konditionierung bzw. nach Abschluss der Festphasennachkondensation müssen die Polyester-Pellets auf eine Temperatur abgekühlt werden, die einen Kontakt mit Polyethylen erlaubt, ohne dass das Material der Gebinde zerstört wird. Zur Kühlung der Polyester-Pellets muss ein erheblicher apparativer Aufwand betrieben werden und die Kühlung erhöht die Betriebskosten zur Herstellung der Polyester-Pellets.

### 2. Energie- und Investitionsaufwand für die Kristallisation und Trocknung der Polyester-Pellets

Das Vorprodukt in Form eines Granulats muss getrocknet und aufgeheizt werden. Dabei kristallisiert das Produkt und aufwändige, mechanisch bewegte Zwischenstufen müssen vorgesehen werden, um das bei der Kristallisation ausgelöste Verkleben der Granulatkörner zu unterbinden. Die Behandlung in Wirbelbetten führt zu Staubbildung und verlangt für einen stabilen Betrieb entsprechende Filteranlagen. Zur Kristallisation und Trocknung der Polyester-Pellets muss ein erheblicher apparativer Aufwand betrieben werden und die Kühlung erhöht die Betriebskosten zur Herstellung der Polyester-Preforms.

### 3. Thermooxidative Schädigung der Polyester-Pellets in der Kristallisation/Trocknung

Auch bei der relativ geringen Temperatur in der Kristallisation/Trocknung werden die Polyester-Pellets bei Kontakt mit dem Luftsauerstoff geschädigt, was zu einer Verschlechterung der Farbe (b*-Wert) führt.

Ausgehend hiervon ist es Aufgabe der vorliegenden Erfindung, Vorrichtungen bzw. Verfahren bereitzustellen, mit denen sich die zuvor genannten Nachteile des Standes der Technik vermeiden lassen.

Diese Aufgabe wird bezüglich einer Trocknungs-/Entgasungsvorrichtung mit den Merkmalen des Patentanspruchs 1, bezüglich einer Vorrichtung zur direkten Herstellung von Formkörpern aus Polyesterschmelzen mit den Merkmalen des Patentanspruchs 5 sowie bezüglich eines Verfahrens zur Herstellung von Formkörpern aus Polyestern mit den Merkmalen des Patentanspruchs 11 gelöst. Die jeweiligen abhängigen Patentansprüche stellen dabei vorteilhafte Weiterbildungen dar.

Erfindungsgemäß wird somit eine Trocknungs-/Entgasungsvorrichtung zur Trocknung und/oder Entgasung eines Polyestergranulats angegeben, wobei die Trocknungs-/Entgasungsvorrichtung
a) einteilig als Behälter, bevorzugt als senkrecht stehender zylindrischer Behälter mit einer im oberen Teil angeordneten Temperierungszone und einer im unteren Teil angeordneten Kühlzone ausgebildet ist, oder
b) zweiteilig als Behälter, bevorzugt als senkrecht stehender zylindrischer Behälter zur Temperierung und einer separaten nachgeschalteten Kühlzone ausgebildet ist, wobei die Kühlzone über eine Verbindungsleitung mit dem Behälter zur Temperierung in Verbindung steht,
die Temperierungszone bzw. der Behälter zur Temperierung über einen kopfseitig angeordneten Einlass für das Polyestergranulat und die Kühlzone über einen bodenseitig angeordneten Auslass für das Polyestergranulat verfügt, und die Trocknungs-/Entgasungsvorrichtung zusätzlich mindestens eine Entnahmemöglichkeit zur Entnahme von temperiertem Polyestergranulat aus der Temperierungszone aufweist.

Die vorliegende Erfindung betrifft somit die direkte Zuführung von Polyester-Pellets zu einer oder mehreren Preform-Maschinen in Kombination mit einer Latentwärmegranulierung und einem Pellet-Konditionierungssilo.

Kennzeichnendes Element der Erfindung ist, dass ein Teilstrom der Polyester-Pellets mit hoher Temperatur vom Konditioniersilo zu den Preform-Maschinen transportiert wird. Dadurch kann für den Teilstrom der Polyester-Pellets die Kühlung im unteren Teil des Konditioniersilos und die Trocknung der Pellets als Vorbehandlung vor dem eigentlichen Prozess der Preform-Herstellung entfallen. Beide Prozessschritte, sowohl die Kühlung der Polyester-Pellets von der Konditioniertemperatur auf die erforderliche Temperatur zur Weiterverarbeitung als auch die Kristallisation und Trocknung der Pellets als Vorbehandlung vor der Preform-Herstellung sind energieintensive Prozessschritte. Daher kann durch die Erfindung eine erhebliche Energieeinsparung realisiert werden.

Mit dem hier verwendeten Begriff "Polyester" sind neben Polyethylenterephthalat auch die verwandten Copolymere gemeint, bei deren Herstellung ein Teil der Monomere (Ethylenglykol und Terephthalsäure) durch andere Diole oder Dicarbonsäuren ersetzt werden.

Unter Latentwärmekristallisation wird hier eine Unterwassergranulierung verstanden, bei der das Granulat durch einen sehr kurzen Kontakt mit Wasser auf hohem Temperaturniveau gehalten wird (Schockkühlung). Das Wasser wird in einer Rührzentrifuge schnell abgeschieden und das Restwasser vor allem durch die aus dem Kern nachströmende Wärme abgedampft. Trotz sofort einsetzender Kristallisation stellen sich keine Verklebungen ein und das Granulat kann dank inhärenter Wärme ohne zusätzlichen Wärmeeintrag zum Produkt direkt thermisch weiter verarbeitet werden. Die anfallende Kristallisationswärme hilft zusätzlich zur Temperaturerhöhung.

Die intrinsische Viskosität (IV) wird hier als Kenngröße für das Molekulargewicht benutzt. Höhere IV und somit längere Moleküle stehen für höhere Festigkeit. Da in der Fachwelt diverse Viskositätsmessmethoden verwendet werden, wird hier immer die intrinsische Viskosität, gemessen nach dem ASTM-Verfahren, verwendet (IV nach ASTM).

Polyester wird in einer Schmelzephase bei bevorzugt 275 bis 300 °C Endtemperatur unter Vakuum hergestellt. Das Produkt wird direkt als Schmelze verwertet oder zu Granulat verarbeitet und so für die Weiterverarbeitung über einen Aufschmelzextruder zur Verfügung gestellt. Je nach Gebrauch werden unterschiedliche Qualitätsanforderungen gestellt, vor allem bezüglich der IV.

Für die Weiterverarbeitung zu Flaschen werden höhere Festigkeiten als in der Synthesefaserindustrie gefordert. Der zusätzlich gewünschte Viskositätsaufbau kann in einer verlängerten Polykondensation in der Schmelzephase selbst oder in einer Festphasennachkondensation erfolgen. Bei der Festphasennachkondensation wird ein Granulat nochmals getrocknet und aufgeheizt und dann im Vakuum oder in einem Gasstrom bei Temperaturen von bevorzugt 200 bis 225 °C polykondensiert. Vakuum oder ein Gasstrom werden für den Reaktionsfortschritt benötigt, um die entstehenden Nebenprodukte (Ethylenglykol, Wasser) abzuführen.

Bei beiden Verfahren, sowohl bei der verlängerten Polykondensation in der Schmelzephase selbst, als auch bei der Festphasennachkondensation, werden die Polyester-Pellets am Ende des Prozesses gekühlt und anschließend in Polyethylen-Säcke oder Container mit Polyethylen-Inlinern abgefüllt. Der folgende Verfahrensschritt ist das Herstellen von sog. "Preforms" in einer "Injection Moulding Maschine". Wenn die Preform-Maschine nicht am selben Ort aufgestellt ist wie die Polykondensationsanlage, werden die Polyester-Pellets mit Land-, See- oder Zugtransport zum Aufstellungsort der Preform-Maschinen gebracht.

Da Polyester-Pellets hygroskopische Eigenschaften haben, ist vor der Preform-Herstellung eine Kristallisation und Trocknung erforderlich, um den Wassergehalt unter 30 ppm abzusenken. Die Trocknung erfolgt bevorzugt bei einer Temperatur zwischen 160 und 180 °C bei einer Verweilzeit von bevorzugt 6 bis 10 Stunden mit trockener Luft. Ohne Vortrocknung würde das in den Polyester-Pellets enthaltene Wasser zu hydrolytischem Abbau der Polymerketten und somit zu einer Reduzierung des IV führen.

Die Voraussetzungen für die direkte Zuführung von Polyester-Pellets zu einer oder mehreren Preform-Maschinen und die Realisierung der oben genannten Vorteile sind folgende:
- Aufstellung von Konditioniersilo und Preform-Maschinen in derselben Anlage, sodass der Transport von Polyester-Pellets mit hoher Temperatur mit einem Fördersystem erfolgen kann.
- Geeignete Vorrichtungen zur Entnahme eines Teilstroms von Polyester-Pellets aus dem Konditioniersilo oberhalb des Kühlers im Fall der Polykondensation in der Schmelzephase selbst. Insbesondere darf der Hauptstrom der Polyester-Pellets im Konditioniersilo nicht gestört werden.
- Die Vorrichtungen zur Entnahme eines Teilstroms von Polyester-Pellets müssen die Bildung von unzureichend durchströmten Zonen (Totzonen) in jedem Fall vermeiden.
- Geeignete Vorrichtungen zum Transport der Polyester-Pellets auf gleichbleibend hoher Temperatur vom Konditioniersilo zu den Preform-Maschinen.

Die erfindungsgemäße Trocknungs-/Entgasungsvorrichtung ist geeignet, entweder eine Trocknung von wasserhaltigem Polyestergranulat bzw. die Entfernung von flüchtigen Substanzen aus dem Polyestergranulat (Entgasung) zu bewerkstelligen. Ebenso kann mit der Trocknungs-/Entgasungsvorrichtung gleichzeitig eine Trocknung und eine Entgasung des eingebrachten Polyestergranulats vorgenommen werden. Die erfindungsgemäße Vorrichtung ist bevorzugt in Form eines senkrecht stehenden, zylindrischen Behälters, ein oder zweiteilig, ausgerichtet.

Die erfindungsgemäße Trocknungs-/Entgasungsvorrichtung weist dabei eine Temperierungszone und eine Kühlzone auf. Die Temperierungszone ist dabei in der Vertikalen über der Kühlzone angebracht. In einer Ausführungsform ist die Trocknungs-/Entgasungsvorrichtung als zylindrischer Behälter ausgebildet, dessen oberer Bereich der Temperierungszone und dessen unterer Bereich der Kühlzone entspricht; ebenso ist es möglich, die Trocknungs-/Entgasungsvorrichtung zweiteilig auszubilden, wobei die Temperierungszone über eine Verbindungsleitung mit der darunter angeordneten Kühlzone in Verbindung steht. Beide Zonen stellen Behältnisse dar, in die Polyestergranulat eingebracht werden kann. Die Durchlaufrichtung der erfindungsgemäßen Trocknungs-/Entgasungsvorrichtung ist dabei von oben nach unten, d.h. die Temperierungszone ist kopfseitig mit einem Einlass für Polyestergranulat versehen, während die Kühlzone einen bodenseitig angeordneten Auslass umfasst.

Erfindungsgemäß ist vorgesehen, dass die Trocknungs-/Entgasungsvorrichtung zusätzlich zum bodenseitigen Auslass eine weitere Entnahmemöglichkeit zur Entnahme von temperiertem Polyestergranulat aus der Temperierungszone aufweist. Somit ermöglicht die erfindungsgemäße Trocknungs-/Entgasungsvorrichtung die Aufteilung des in die Trocknungs-/Entgasungsvorrichtung eingebrachten Polyestergranulats in die Temperierungszone in zwei Teilströme, wobei ein Teilstrom über die Kühlzone und ein anderer Teilstrom über die Temperierungszone entnommen werden kann.

In der Kühlzone erfolgt eine Abkühlung des Polyestergranulats beispielsweise auf Umgebungstemperatur, so dass im direkten Anschluss eine Abpackung, chargenweise Verpackung oder Lagerung des Polyestergranulats, beispielsweise in einem Silo, möglich ist. Die Temperierungszone wird bevorzugt mit heißem Polyestergranulat befüllt, beispielsweise liegt die Temperatur des aufgegebenen Polyestergranulats zwischen 50 °C und 250 °C. Jedoch kann das Polyestergranulat, das in die erfindungsgemäße Trocknungs-/Entgasungsvorrichtung aufgegeben wird, auch Temperaturen annehmen, die zwischen diesen Eckpunkten liegen.

Dabei ist es möglich, dass die Temperierungszone lediglich ein Behältnis darstellt, in dem das Polyestergranulat sich aufgrund der Schwerkraft von oben nach unten durchbewegt. Ebenso ist es jedoch auch möglich, dass die Temperierungszone gegenüber der Umgebung isoliert ist, alternativ oder zusätzlich hierzu ist es jedoch auch möglich, dass die Temperierungszone Heizelemente aufweist, mit denen sich das in der Temperierungszone befindliche Polyestergranulat auf einer vorgegebenen Temperatur halten lässt oder auf eine vorgegebene Temperatur aufgewärmt werden kann.

Zusätzlich ist es möglich, dass die Temperierungszone oder die Kühlzone oder beide Zonen aktive Mischelemente, wie beispielsweise Rührer oder Schnecken, etc., oder passive Mischelemente aufweisen, wodurch eine Vergleichmäßigung der Temperierung des aufgegebenen Polyestergranulats erhalten werden kann.

Die Erfindung bringt folgende Vorteile:
- Energieeinsparung dadurch, dass die Kühlung eines Teilstroms der Polyester-Pellets entfallen kann,
- Einsparung von Investitionskosten dadurch, dass die Kühlung eines Teilstroms der Polyester-Pellets entfallen kann oder der Kühler kleiner ausgelegt werden kann,
- Energieeinsparungen dadurch, dass die Kristallisation/Trocknung der Polyester-Pellets vor den Preform-Maschinen entfallen kann oder die Dauer der Kristallisation/Trocknung erheblich reduziert werden kann,
- Einsparung von Investitionskosten dadurch, dass die Kristallisation/Trocknung der Polyester-Pellets vor den Preform-Maschinen entfallen kann oder erheblich kleiner dimensioniert werden kann,
- Verbesserung der Qualität der Polyester-Pellets, da die thermo-oxidative Schädigung der Polyester-Pellets durch die Kristallisation/Trocknung vor den Preform-Maschinen entfallen kann oder die Schädigung geringer ausfällt,
- Verbesserung der Wirtschaftlichkeit des Gesamtprozesses durch die Integration der Polyester-Pellet- und der Preform-Herstellung.
Erfindungsgemäß ist vorgesehen, dass die mindestens eine Entnahmemöglichkeit für die Entnahme aus temperiertem, d.h. heißem Polyestergranulat, aus der Temperierungszone durch
a) mindestens ein in Durchlaufrichtung vor der Kühlzone angeordnetes Ablaufrohr, das über die Wandung des zylindrischen Behälters mit dem Inneren der Temperierungszone des zylindrischen Behälters verbunden ist,
b) mindestens ein, zwei oder mehr Rohre, bevorzugt Doppelmantelrohre, die ausgehend von der Temperierungszone durch die Kühlzone durchgeführt sind,
c) mindestens einen vertikal durch die Kühlzone durchgehend ausgebildeten Ringspalt, der eine Durchführung der Polyesterpellets von der Temperierungszone durch die Kühlzone hindurch ermöglicht,
d) mindestens eine in Durchlaufrichtung vor der Kühlzone angeordnete Förderschnecke, die über die Wandung des zylinderförmigen Behälters mit dem Inneren der Temperierungszone des zylinderförmigen Behälters verbunden ist,
e) mindestens ein Ablaufrohr, das mit der Verbindungsleitung in Verbindung steht, oder
f) Kombinationen aus den zuvor genannten Möglichkeiten
gebildet ist.

Die Entnahmemöglichkeit kann somit durch verschiedene vorteilhafte alternative Ausführungsformen realisiert sein.

Die oben genannte erste Alternative a) sieht vor, dass mindestens ein Ablaufrohr in Durchlaufrichtung, d.h. von oben nach unten bezüglich der Trocknungs-/Entgasungsvorrichtung, vor der Kühlzone angeordnet ist, das durch die Wandung des zylindrischen Behälters der Temperierungszone durchgeführt ist. Dieses Ablaufrohr kann beispielsweise schlüssig mit der Innenseite der Wandung des zylindrischen Behälters der Temperierungszone enden, kann jedoch auch über die Wandung hinaus in das Innere der Temperierungszone hinein ragen und beispielsweise so geführt sein, dass es eine nach oben ragende Öffnung aufweist, so dass gezielt ein Teilstrom aus der Temperierungszone entnommen werden kann. Diese bevorzugte Ausführungsform ist sowohl für eine oben beschriebene einteilig ausgeführte Trocknungs-/Entgasungsvorrichtung also auch für eine zweiteilig ausgeführte Trocknungs-/Entgasungsvorrichtung geeignet.

Die zweite oben angesprochene Alternative b) sieht vor, dass mindestens ein, zwei oder mehr Rohre, die bevorzugt als Doppelmantelrohre ausgebildet sind, ausgehend vom zylindrischen Behälter der Temperierungszone durch die Kühlzone durchgeführt sind. Diese Ausführungsform kann beispielsweise vorsehen, dass diese Rohre vom Boden des zylinderförmigen Behälters der Temperierungszone ausgehen und durch die Kühlzone von oben nach unten gehend durchgeführt sind. Diese Ausführungsform ist insbesondere für die oben beschriebene einteilig ausgeführte Trocknungs-/Entgasungsvorrichtung als auch für die zweiteilig ausgeführte Trocknungs-/Entgasungsvorrichtung geeignet.

Gemäß der oben angegebenen dritten alternativen Ausführungsform c) der Entnahmemöglichkeit ist es möglich, dass diese durch einen Ringspalt gebildet ist. Bei dieser Ausführungsform sind im zylindrischen Behälter der Temperierungszone entsprechende ringförmige Aussparungen im Boden eingebracht. Die Begrenzungen des Ringspaltes, d.h. die Wandungen des Ringspaltes, sind dabei durch die Kühlzone durchgeführt. Die Durchführung kann beispielsweise von oben nach unten vertikal erfolgen, so dass am Boden der Kühlzone ebenso eine ringspaltförmige Austrittsöffnung resultiert, an der das heiße Polyestergranulat wieder eingesammelt werden kann. Ebenso ist es auch möglich, dass der Ringspalt unter einem Winkel gegenüber der Vertikalen geführt wird, d.h. eine schräge Bodenwandung aufweist, so dass die heißen Polyesterpellets auf einer Seite gesammelt werden können. Diese bevorzugte Ausführungsform ist sowohl für die oben genannte einteilige als auch zweiteilige Ausführungsform der erfindungsgemäßen Trocknungs-/Entgasungsvorrichtung geeignet.

Die vierte bevorzugte Ausführungsform d) der Entnahmemöglichkeit sieht vor, dass die Entnahmemöglichkeit aktiv ausgebildet ist, d.h. ein Mittel aufweist, das eine aktive Entnahme der Polyesterpellets aus der Temperierungszone ermöglicht. Diese aktive Entnahmemöglichkeit kann beispielsweise als Förderschnecke ausgeführt sein, die durch die Wandung des zylindrischen Behälters der Temperierungszone durchgeführt ist. Auch diese Ausführungsform ist sowohl für die oben genannte einteilige als auch zweiteilige Ausführungsform der erfindungsgemäßen Trocknungs-/Entgasungsvorrichtung geeignet.

Für den Fall, dass die erfindungsgemäße Trocknungs-/Entgasungsvorrichtung zweiteilig ausgebildet ist, d.h. die Temperierungszone und die Kühlzone über eine Verbindungsleitung separiert sind, sieht die weiter oben angegebene bevorzugte Ausführungsform e) vor, dass die Entnahmemöglichkeit durch ein Ablaufrohr gebildet ist, das in fluidischer Verbindung mit der Verbindungsleitung steht. Auch hier kann es bevorzugt sein, dass das Ablaufrohr bündig mit der Innenwandung der Verbindungsleitung abschließt, ebenso kann es jedoch gegeben sein, dass das Ablaufrohr durch die Wandung der Verbindungsleitung durchgeführt ist und in das Innere der Verbindungsleitung hinein ragt. Auch hier kann beispielsweise die Öffnung des Ablaufrohrs nach oben ragend in die Verbindungsleitung ausgeführt sein.

Zudem ist die erfindungsgemäße Realisierung der Entnahmemöglichkeit nicht auf eine einzelne der zuvor genannten Entnahmemöglichkeiten beschränkt, vielmehr können auch Kombinationen der zuvor genannten Möglichkeiten geeignet sein, eine erfindungsgemäße Trocknungs-/Entgasungsvorrichtung zu realisieren.

Eine weitere bevorzugte Ausführungsform sieht vor, dass die Entnahmemöglichkeiten thermisch isoliert sind. Dabei können die zuvor genannten Bestandteile der Entnahmemöglichkeit, insbesondere die Ablaufrohre, die Doppelmantelrohre, die Ringspalte (beispielsweise über die Wandungen) oder das Gehäuse der Förderschnecke, thermisch isoliert sein.

Für den Fall, dass mehrere Entnahmemöglichkeiten zur Abführung heißen Polyestergranulats aus dem zylindrischen Behälter der Temperierungszone vorgesehen sind, ist es weiter vorteilhaft, wenn diese Entnahmemöglichkeiten nach Austritt oder Ausführung des Polyestergranulats aus der Temperierungszone zusammengeführt und einer einzelnen Rohrleitung zugeführt werden.

Weiter ist es bevorzugt, wenn die Trocknungs-/Entgasungsvorrichtung eine Möglichkeit zur Durchführung von Gasen im Gegenstrom zum Polyestergranulat aufweist. Bevorzugt wird ein Verfahren angegeben, dass mit einer Vorrichtung durchgeführt wird, umfassend:
a) einen Unterwassergranulator zur Erzeugung von Polyestergranulat aus einer Polyesterschmelze,
b) eine dem Unterwassergranulator nachgeschaltete Vorrichtung zur Abtrennung des durch den Unterwassergranulator erzeugten Polyestergranulats vom Wasser,
c) der Vorrichtung zur Abtrennung des Polyestergranulats nachgeschaltet eine zuvor beschriebene erfindungsgemäße Trocknungs-/Entgasungsvorrichtung zur Trocknung und/oder Entgasung des Polyestergranulats
d) eine Transporteinrichtung zur Entnahme des Polyestergranulats aus der Trocknungs-/Entgasungsvorrichtung, wobei die Transporteinrichtung mit der Entnahmemöglichkeit der Trocknungs-/Entgasungsvorrichtung in Verbindung steht und zur Zuführung des Granulats zu mindestens einem
e) Formwerkzeug zur Herstellung von Formkörpern aus dem Granulat, dient.
Das Verfahren ermöglicht somit die direkte Herstellung von Polyester-Formkörpern beginnend von Polyesterschmelzen. Diese Polyesterschmelzen können beispielsweise durch Aufschmelzen bereits vorliegenden Granulats erhalten werden, ebenso ist es jedoch möglich, die Polyesterschmelzen direkt einer Polykondensationsreaktion zu entnehmen und dem Unterwassergranulator zuzuführen. Das Verfahren ermöglicht die Erzeugung eines hochkristallinen Polyestergranulats, dessen Verwendung sich insbesondere auf die erhaltenen Formkörper positiv auswirkt.

Gemäß einer weiter bevorzugten Ausführungsform weist die Vorrichtung zur Abtrennung des durch den Unterwassergranulator erzeugten Polyestergranulats vom Wasser eine Rührzentrifuge auf, die bevorzugt eine Möglichkeit zur Absaugung von Gasen und/oder flüchtigen Kondensaten aufweist.

Ebenso ist es möglich, dass die Transportvorrichtung als pneumatische Transportvorrichtung oder als mechanische Transportvorrichtung, insbesondere als Kettentransportvorrichtung oder als Förderschnecke, ausgestaltet ist.

Eine bevorzugte Ausführungsform des Formwerkzeugs sieht vor, dass dieses ein Vorlagesilo, einen Extruder sowie eine Spritzgießwerkzeug umfasst.

Weiter wird gemäß der vorliegenden Erfindung ein Verfahren zur Herstellung von Formkörpern aus Polyestern angegeben, bei dem
a) eine Polyesterschmelze mittels eines Unterwassergranulators granuliert,
b) das Granulat vom Kühlwasser abgetrennt, sowie
c) getrocknet/entgast wird,
wobei zumindest ein Teil des in Stufe c) getrockneten/entgasten und/oder nachkondensierten Granulats ohne weitere Kühlung mindestens einem Formwerkzeug zugeführt und in einen Formkörper überführt wird.

Bevorzugt ist dabei, dass das Granulat während Stufe c) auf einer Temperatur von 100 bis 200 °C, bevorzugt 140 bis 190 °C, besonders bevorzugt von 160 bis 180 °C gehalten wird.

Weiter ist es erfindungsgemäß bevorzugt, wenn die Temperatur des Polyestergranulats bei der Zuführung zum Formwerkzeug auf ± 50 °C, bevorzugt ± 30 °C, besonders bevorzugt ± 15 °C, bezogen auf die Granulattemperatur während Stufe c), gehalten wird.

Insbesondere ist das Verfahren mit einer Vorrichtung zur direkten Herstellung von Formkörpern aus Polyesterschmelzen, die die erfindungsgemäße Trocknungs-/Entgasungsvorrichtung umfasst, wie voranstehend beschrieben, durchführbar.

Eine weitere bevorzugte Ausführungsform des erfindungsgemäßen Verfahrens sieht vor, dass der nicht dem Formwerkzeug zugeführte Teil des Polyestergranulats im Anschluss an Stufe c) gekühlt wird.

Weiter bevorzugt ist, wenn das Verhältnis des dem Formwerkzeug zugeführten Granulats und des gekühlten Granulats zwischen 0,1 und 0,7, bevorzugt zwischen 0,3 und 0,5 eingestellt wird.

Die vorliegende Erfindung wird anhand der nachfolgend abgebildeten Figuren näher erläutert, ohne die Erfindung jedoch auf die dort dargestellten besonderen Ausführungsformen zu beschränken.

In den Figuren zeigen
- Figur 1: eine erfindungsgemäße Vorrichtung zur direkten Herstellung von Formkörpern aus Polyesterschmelzen mit einer erfindungsgemäßen Trocknungs-/Entgasungsvorrichtung, deren Entnahmemöglichkeit als Einsteckrohr oberhalb des Pelletkühlers ausgebildet ist,
- Figur 2: eine erfindungsgemäße Vorrichtung zur direkten Herstellung von Formkörpern aus Polyesterschmelzen mit einer erfindungsgemäßen Trocknungs-/Entgasungsvorrichtung, bei der die Entnahmemöglichkeit als durch den Pelletkühler geführtes Doppelmantelrohr ausgebildet ist,
- Figur 3: eine erfindungsgemäße Vorrichtung zur direkten Herstellung von Formkörpern aus Polyesterschmelzen mit einer erfindungsgemäßen Trocknungs-/Entgasungsvorrichtung, bei der die Entnahmemöglichkeit als Ringspalt im Boden der Temperierungszone ausgebildet ist, die teilweise durch den Kühler nach außen durchgeführt ist,
- Figur 4: eine erfindungsgemäße Vorrichtung zur direkten Herstellung von Formkörpern aus Polyesterschmelzen mit einer erfindungsgemäßen Trocknungs-/Entgasungsvorrichtung, bei der die Entnahmemöglichkeit als Förderschnecke oberhalb des Pelletkühlers ausgebildet ist, sowie
- Figur 5: eine erfindungsgemäße Vorrichtung zur direkten Herstellung von Formkörpern aus Polyesterschmelzen mit einer erfindungsgemäßen Trocknungs-/Entgasungsvorrichtung, die zweiteilig ausgeführt ist, bei der die Temperierungszone vom Kühler separiert und über eine Verbindungsleitung verbunden ist, wobei die Entnahmemöglichkeit in der Verbindungsleitung ausgebildet ist.

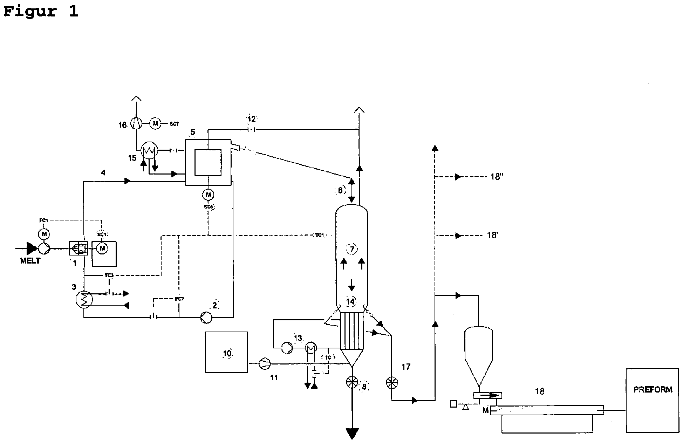

In Figur 1 ist eine Apparatur zur Herstellung von Formkörpern aus Polyesterschmelzen dargestellt, die eine erfindungsgemäße Trocknungs-/Entgasungsvorrichtung 7 umfasst. Die Trocknungs-/Entgasungsvorrichtung 7 weist eine Entnahmemöglichkeit 14 zur Entnahme eines Teilstroms von Polyester-Pellets mit hoher Temperatur auf, der über einen Transfer 17 zu den Preform-Maschinen 18, 18', 18" geführt wird. Die Entnahme 14 des Teilstroms erfolgt oberhalb des Kühlers 12 an zwei oder mehr Stellen am äußeren Umfang der Trocknungs-/Entgasungsvorrichtung 7. Die Entnahmestellen 14 münden in ein Ablaufrohr 17, das in einem Winkel zur Vertikalen angeordnet ist.

Die zwei oder mehr Entnahmestellen 14 werden in einer gemeinsamen Rohrleitung 17 zusammengeführt, die an ein Fördersystem 17a angeschlossen ist. Das Fördersystem 17a transportiert die Polyester-Pellets mit hoher Temperatur direkt zu den Preform-Maschinen 18, 18', 18". Es können eine oder mehrere Preform-Maschinen 18, 18', 18" mit Polyester-Pellets auf hoher Temperatur beschickt werden. Die Polyester-Pellets werden ohne Kristallisation und Trocknung nur mit geringer Verweilzeit im Vorlagebehälter direkt zu den Preform-Maschinen 18, 18', 18" eingespeist.

Die Anzahl der Entnahmestellen wird festgelegt je nach Verhältnis zwischen Teilstrom zu den Preform-Maschinen 18, 18', 18" und dem Hauptstrom 8 zum Pellet-Kühler.

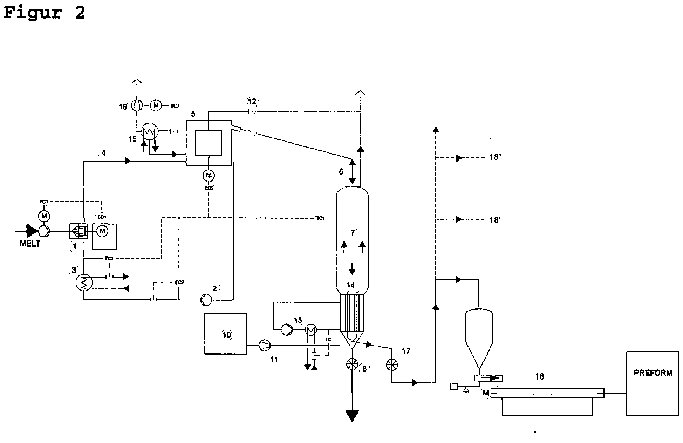

Die erfindungsgemäße Trocknungs-/Entgasungsvorrichtung 7 ist dabei einteilig ausgebildet, d.h. an die Temperierungszone (auch Konditioniersilo genannt) schließt sich vertikal nach unten verlaufend direkt eine Kühlvorrichtung 13 an. Auch die Trocknungs-/Entgasungsvorrichtungen 7 in den Figuren 2 bis 4 sind derart ausgestaltet.

Die erfindungsgemäße Vorrichtung zur Herstellung von Formkörpern besteht aus folgenden Hauptkomponenten, die in allen Figuren 1 bis 5 gleich ausgestaltet sind.
(1) Unterwassergranulierung:
   Eine geregelte Menge Polyesterschmelze (FC1) wird über eine passende Anzahl Düsen in eine wasserdurchströmte Kammer gedrückt.
(2) Kühlwasserzirkulation:
   Die Menge des durch die Zirkulationspumpe 2 umgewälzten Granulierwassers wird geregelt, damit sich in der Kühlstrecke 4 die richtige Verweilzeit einstellt.
(3) Kühlung des Granulierwassers:
   Neben der Verweilzeit in der Kühlstrecke hat die im Kühler 3 mit (TC3) geregelte Wassertemperatur einen starken Einfluss auf die verbleibende Restwärme.
(5) Rührzentrifuge -> Wasserentfernung:
   Neben der Verweilzeit und der Temperatur in der Kühlstrecke ist die verbleibende Kontaktzeit zwischen Wasser und Granulatkorn in der Rührzentrifuge 5 ausschlaggebend für die Restwärme, die im Granulatkorn verbleibt. Mit der regelbaren Rotordrehzahl (SC5) kann die Kontaktzeit von Granulat mit Wasser in der Zentrifuge optimal eingestellt werden.
(16) Absaugung:
   Feine Tropfen und Wasserdampf werden durch das Absauggebläse 16 möglichst schnell durch das Sieb der Zentrifuge abgezogen, wobei das Wasser über den Kondensator 15 weitgehend zurückgewonnen wird. Die Absaugung wird unterstützt durch heißes und trockenes Gas aus der thermischen Behandlung 12.
(7) Trocknungs-/Entgasungsvorrichtung Die Temperatur der thermischen Behandlung ist durch die Restwärme im Granulat und die Kristallisationswärme gegeben. Die Restwärme wird mit folgenden Prozessgrößen kontrolliert (TC1):
   - Granulatgewicht durch Schmelzemenge (FC1) und Granulatordrehzahl (SC1),
   - Kontaktzeit Wasser-Granulat durch die Wassermenge (FC2) und die Geschwindigkeit in der Kühlstrecke 4 sowie die Drehzahl der .Rührzentrifuge (SC5),
   - Granulierwassertemperatur (TC3),
   - Absaugung (SC7) mit Unterstützung der Gasströme 6 und 12.

Mit dem Gebläse 11 wird Luft von unten nach oben durch die in einem Silo von oben nach unten fließende Granulatschüttung geleitet. Dabei nimmt das Gas leichtflüchtige Nebenprodukte, wie Wasser, Ethylenglykol, Acetaldehyd, etc., auf. Bei einer Temperatur von mehr als 175 °C führt dies zu einem Viskositätsanstieg und einer Reduktion des AA-Gehalts, also zu einer Festphasennachkondensation. Mit steigender Temperatur (TC1) sind sowohl Viskositätsanstieg als auch AA-Reduktion pro Zeiteinheit grösser.
(10) Entfeuchtung der Luft:
   Bei einer thermischen Behandlung mit Umgebungsluft soll diese entfeuchtet werden (9).
(8) Weiterverarbeitung:
   Das Granulat kann in einem im Silo integrierten oder nachgeschalteten Kühler für eine Verpackung auf die dafür zulässige Temperatur gekühlt werden.
(13) Kühler mit Wasserzirkulation zur Kühlung der Pellets:
   Das Kreislaufwasser wird mit Kühlwasser rückgekühlt.
(14) Entnahmevorrichtung der Polyester-Pellets auf hoher Temperatur oberhalb des Kühlers:
   Im Fall der Ausprägung der Erfindung gemäß der Figur 1 ist diese Entnahmevorrichtung als Einsteckrohr ausgeführt. Im Fall der Ausprägung der Erfindung gemäß Fig. 2 bis 5 ist die Ausführung der Entnahmevorrichtung in den jeweiligen Abschnitten beschrieben.
(17) Transportvorrichtung für Polyester-Pellets auf hoher Temperatur, bestehend aus Leitung und Vorschub.
(18) Preform-Maschine inkl. Vorlagesilo, Extruder und "Injection Moulding"-Maschine. Die Anzahl der Preform-Maschinen ist nicht begrenzt, je nach Kapazität der Preform-Maschinen können zwischen 1 und 20 Maschinen (z.B. 18, 18', 18") direkt mit Polyester-Pellets auf hoher Temperatur beschickt werden. Die Anzahl und die Größe der Entnahmestellen 14 aus der erfindungsgemäßen Trocknungs-/Entgasungsvorrichtung 7 sowie die Kapazität des Fördersystems 17 müssen an die Gesamtkapazität der Preform-Maschinen 18, 18', 18" angepasst werden.

In Figur 2 ist eine Apparatur zur Entnahme 14 eines Teilstroms von Polyester-Pellets mit hoher Temperatur aus einem Konditioniersilo 7 und Transfer zu den Preform-Maschinen 18 gezeigt. Die Entnahme 14 des Teilstroms erfolgt durch zwei oder mehr Doppelmantelrohre, die durch den Kühler geführt werden. Die Doppelmantelrohre können zusätzlich mit einer Isolierschicht ausgerüstet sein, die den Temperaturabfall reduziert. Die Doppelmantelrohre münden in ein gemeinsames Ablaufrohr, das an ein Fördersystem 17 angeschlossen ist.

Das Fördersystem 17 transportiert die Polyester-Pellets mit hoher Temperatur direkt zu den Preform-Maschinen 18. Es können eine oder mehrere 18, 18', 18" Preform-Maschinen 18 mit Polyester-Pellets auf hoher Temperatur beschickt werden. Die Polyester-Pellets werden ohne Kristallisation und Trocknung nur mit geringer Verweilzeit im Vorlagebehälter, direkt zu den Preform-Maschinen 18, 18', 18" eingespeist.

Die Anzahl der Doppelmantelrohre wird festgelegt je nach Verhältnis zwischen Teilstrom zu den Preform-Maschinen 18, 18', 18" und dem Hauptstrom zum Pellet-Kühler.

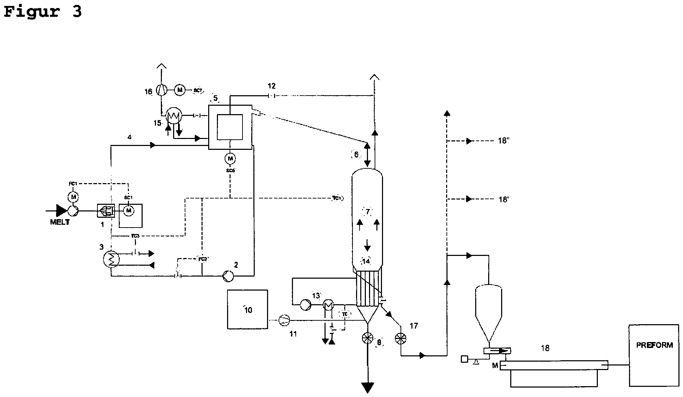

In Figur 3 ist eine Apparatur zur Entnahme eines Teilstroms von Polyester-Pellets mit hoher Temperatur aus einer erfindungsgemäßen Trocknungs-/Entgasungsvorrichtung 7 und Transfer zu den Preform-Maschinen 18 gezeigt. Die Entnahme 14 des Teilstroms erfolgt durch einen zylinderförmigen Ringspalt, der mit dem Innenraum der erfindungsgemäßen Trocknungs-/Entgasungsvorrichtung 7 mit runden oder schlitzförmigen Öffnungen verbunden ist. Der Boden des Ringspalt-Zylinders ist unter einem Winkel gegenüber der Vertikalen angeordnet, so dass die Polyester-Pellets auf einer Seite gesammelt werden. An der tiefsten Stelle des Ringspalt-Zylinders ist ein Austrittsrohr angeordnet, das an ein Fördersystem 17 angeschlossen ist. Der Ringspalt-Zylinder kann zusätzlich mit einer Isolierschicht ausgerüstet sein, die den Temperaturabfall reduziert.

Das Fördersystem 17 transportiert die Polyester-Pellets mit hoher Temperatur direkt zu den Preform-Maschinen 18, 18', 18". Es können eine oder mehrere Preform-Maschinen mit Polyester-Pellets auf hoher Temperatur beschickt werden. Die Polyester-Pellets werden ohne Kristallisation und Trocknung nur mit geringer Verweilzeit im Vorlagebehälter, direkt zu den Preform-Maschinen 18, 18', 18" eingespeist.

Die Anzahl der Öffnungen zwischen Innenteil und Ringspalt-Zylinder wird festgelegt je nach Verhältnis zwischen Teilstrom zu den Preform-Maschinen 18, 18', 18" und dem Hauptstrom zum Pellet-Kühler.

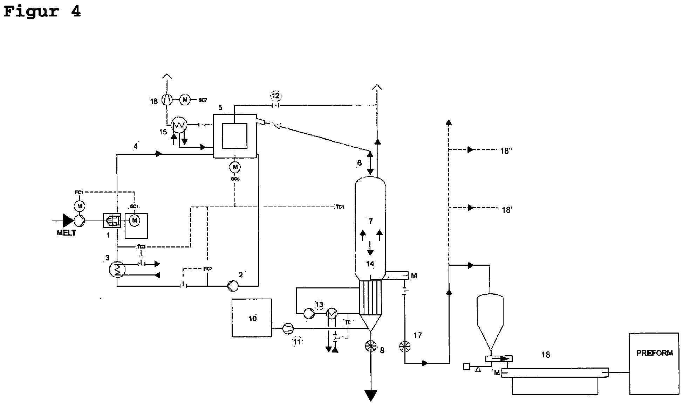

In Figur 4 ist eine Apparatur 14 zur Entnahme eines Teilstroms von Polyester-Pellets mit hoher Temperatur aus einer erfindungsgemäßen Trocknungs-/Entgasungsvorrichtung 7 und Transfer 17 zu den Preform-Maschinen 18, 18', 18" gezeigt. Die Entnahme des Teilstroms erfolgt durch eine angetriebene Förderschnecke. Der Austritt der Förderschnecke ist mit dem Eintritt des Fördersystems mit einer Rohrleitung verbunden.

Das Fördersystem 17 transportiert die Polyester-Pellets mit hoher Temperatur direkt zu den Preform-Maschinen. Es können eine oder mehrere Preform-Maschinen mit Polyester-Pellets auf hoher Temperatur beschickt werden. Die Polyester-Pellets werden ohne Kristallisation und Trocknung nur mit geringer Verweilzeit im Vorlagebehälter, direkt zu den Preform-Maschinen 18, 18', 18" eingespeist.

Die Größe und die Drehzahl der Förderschnecke wird festgelegt je nach Verhältnis zwischen Teilstrom zu den Preform-Maschinen 18, 18', 18" und dem Hauptstrom zum Pellet-Kühler.

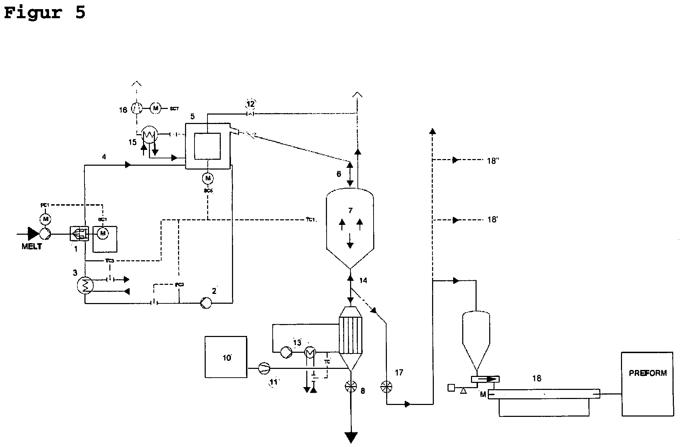

In Figur 5 ist eine Apparatur 14 zur Entnahme eines Teilstroms von Polyester-Pellets mit hoher Temperatur aus einer Trocknungs-/Entgasungsvorrichtung 7 und Transfer zu den Preform-Maschinen 18, 18', 18" gezeigt. Die erfindungsgemäße Trocknungs-/Entgasungsvorrichtung 7 ist dabei zweiteilig ausgebildet, wobei der Pellet-Kühler vom Konditioniersilo abgetrennt vorliegt. Zwischen dem Konus des Konditioniersilos und dem Pellet-Kühler werden Pellets auf hoher Temperatur über ein Hosenrohr oder ein T-Stück entnommen. Die Polyester-Pellets werden auf hoher Temperatur einem Fördersystem 17 zugeführt.

Das Fördersystem 17 transportiert die Polyester-Pellets mit hoher Temperatur direkt zu den Preform-Maschinen 18, 18', 18". Es können eine oder mehrere Preform-Maschinen 18, 18', 18" mit Polyester-Pellets auf hoher Temperatur beschickt werden. Die Polyester-Pellets werden ohne Kristallisation und Trocknung nur mit geringer Verweilzeit im Vorlagebehälter direkt zu den Preform-Maschinen 18, 18', 18" eingespeist.

Die Transportleistung des Fördergeräts bestimmt das Verhältnis zwischen Teilstrom der Pellets zu den Preform-Maschinen 18, 18', 18" und dem Hauptstrom zum Pellet-Kühler.

## Patentansprüche

1. Trocknungs-/Entgasungsvorrichtung (7) zur Trocknung und/oder Entgasung eines Polyestergranulats, wobei die Trocknungs-/Entgasungsvorrichtung
a) einteilig als Behälter mit einer im oberen Teil angeordneten Temperierungszone und einer im unteren Teil angeordneten Kühlzone ausgebildet ist, oder
b) zweiteilig als Behälter zur Temperierung und einer separaten nachgeschalteten Kühlzone ausgebildet ist, wobei die Kühlzone mit dem Behälter zur Temperierung in Verbindung steht,
die Temperierungszone bzw. der Behälter zur Temperierung über einen kopfseitig angeordneten Einlass für das Polyestergranulat und die Kühlzone über einen bodenseitig angeordneten Auslass für das Polyestergranulat verfügt, **dadurch gekennzeichnet, dass** die Trocknungs-/Entgasungsvorrichtung zusätzlich mindestens eine Entnahmemöglichkeit (14) zur Entnahme von temperiertem Polyestergranulat aus der Temperierungszone aufweist, wobei die mindestens eine Entnahmemöglichkeit (14) durch
a) mindestens ein in Durchlaufrichtung vor der Kühlzone angeordnetes Ablaufrohr, das über die Wandung des zylindrischen Behälters mit dem Inneren der Temperierungszone des zylindrischen Behälters verbunden ist,
b) mindestens ein, zwei oder mehr Rohre, bevorzugt Doppelmantelrohre, die ausgehend von der Temperierungszone durch die Kühlzone durchgeführt sind,
c) mindestens einen vertikal durch die Kühlzone durchgehend ausgebildeten Ringspalt, der eine Durchführung der Polyesterpellets von der Temperierungszone durch die Kühlzone hindurch ermöglicht,
d) mindestens eine in Durchlaufrichtung vor der Kühlzone angeordnete Förderschnecke, die über die Wandung des zylinderförmigen Behälters mit dem Inneren der Temperierungszone des zylinderförmigen Behälters verbunden ist,
e) mindestens ein Ablaufrohr, das mit der Verbindungsleitung in Verbindung steht, oder
f) Kombinationen aus den zuvor genannten Möglichkeiten
gebildet ist.

2. Trocknungs-/Entgasungsvorrichtung (7) nach Anspruch 1, **dadurch gekennzeichnet, dass** die Entnahmemöglichkeit (14) thermisch isoliert ist.

3. Trocknungs-/Entgasungsvorrichtung (7) nach einem der vorhergehenden Ansprüche, **dadurch gekennzeichnet, dass** die Trocknungs-/Entgasungsvorrichtung eine Möglichkeit (11) zur Durchführung von Gasen im Gegenstrom zum Polyestergranulat aufweist.

4. Verfahren zur Herstellung von Formkörpern aus Polyestern, bei dem
a) eine Polyesterschmelze mittels eines Unterwassergranulators granuliert,
b) das Granulat vom Kühlwasser abgetrennt, sowie
c) getrocknet/entgast und/oder nachkondensiert wird mit einer Trocknungs-/Entgasungsvorrichtung nach mindestens einem der Ansprüche 1 bis 3
**dadurch gekennzeichnet,**
**dass** zumindest ein Teil des in Stufe c) getrockneten/entgasten und/oder nachkondensierten Granulats ohne weitere Kühlung mindestens einem Formwerkzeug zugeführt und in einen Formkörper überführt wird.

5. Verfahren nach Anspruch 4, **dadurch gekennzeichnet, dass** das Granulat während Stufe c) auf einer Temperatur von 100 bis 200 °C, bevorzugt 140 bis 190 °C, besonders bevorzugt von 160 bis 180 °C gehalten wird.

6. Verfahren nach einem der beiden vorhergehenden Ansprüche, **dadurch gekennzeichnet, dass** die Temperatur des Polyestergranulats bei der Zuführung zum Formwerkzeug auf ± 50 °C, bevorzugt ± 30 °C, besonders bevorzugt ± 15 °C, bezogen auf die Granulattemperatur während Stufe c), gehalten wird.

7. Verfahren nach einem der Ansprüche 4 bis 6, **dadurch gekennzeichnet, dass** der nicht dem Formwerkzeug zugeführte Teil des Polyestergranulats im Anschluss an Stufe c) gekühlt wird.

8. Verfahren nach vorhergehendem Anspruch, **dadurch gekennzeichnet, dass** das Verhältnis des dem Formwerkzeug zugeführten Granulats und des gekühlten Granulats zwischen 0,1 und 0,7, bevorzugt zwischen 0,3 und 0,5 eingestellt wird.

9. Verfahren nach einem der Ansprüche 4 bis 8, **dadurch gekennzeichnet, dass** es mit einer Vorrichtung durchgeführt wird, umfassend:
a)einen Unterwassergranulator (1) zur Erzeugung von Polyestergranulat aus einer Polyesterschmelze,
b) eine dem Unterwassergranulator (1) nachgeschaltete Vorrichtung (5, 16) zur Abtrennung des durch den Unterwassergranulator (1) erzeugten Polyestergranulats vom Wasser,
c) der Vorrichtung (5, 16) zur Abtrennung des Polyestergranulats nachgeschaltet eine Trocknungs-/Entgasungsvorrichtung (7) zur Trocknung und/oder Entgasung des Polyestergranulats nach einem der vorhergehenden Ansprüche,
d) eine Transporteinrichtung (17) zur Entnahme des Polyestergranulats aus der Trocknungs-/Entgasungsvorrichtung (7), wobei die Transporteinrichtung (17) mit der Entnahmemöglichkeit (14) der Trocknungs-/Entgasungsvorrichtung (7) in Verbindung steht zur Zuführung des Granulats zu mindestens einem
e) mindestens ein Formwerkzeug (18) zur Herstellung von Formkörpern aus dem Granulat.

10. Verfahren nach Anspruch 9, **dadurch gekennzeichnet, dass** der Festphasennachkondensationsreaktor zweiteilig ausgebildet ist und einen Bereich zur Festphasennachkondensation des Polyestergranulats sowie eine separate nachgeschaltete Kühlzone aufweist, wobei die Kühlzone über eine Verbindungsleitung mit dem Behälter zur Festphasennachkondensation in Verbindung steht, wobei der Bereich zur Festphasennachkondensation einen Einlass für das Polyestergranulat aufweist und die Kühlzone einen Auslass für das Polyestergranulat aufweist, und die Entnahmemöglichkeit durch mindestens ein Ablaufrohr, das mit der Verbindungsleitung in Verbindung steht, gebildet ist.

11. Verfahren nach einem der vorhergehenden Ansprüche 9 oder 10, **dadurch gekennzeichnet, dass** der Festphasennachkondensationsreaktor eine Möglichkeit zur Durchführung von Gasen im Gegenstrom zum Polyestergranulat aufweist.

12. Vorrichtung nach einem der vorhergehenden Ansprüche 9 bis 11, **dadurch gekennzeichnet, dass** die Vorrichtung (5, 16) zur Abtrennung des durch den Unterwassergranulator erzeugten Polyestergranulats vom Wasser als Rührzentrifuge (5) ausgebildet ist, die bevorzugt eine Möglichkeit (16) zur Absaugung von Gasen und/oder flüchtigen Kondensaten aufweist.

13. Verfahren nach einem der vorhergehenden Ansprüche 9 bis 12, **dadurch gekennzeichnet, dass** die Transportvorrichtung (15) als pneumatische Transportvorrichtung oder als mechanische Transportvorrichtung, insbesondere als Kettentransportvorrichtung oder als Förderschnecke ausgestaltet ist.

## Claims

1. Drying-/degassing device (7) for drying and/or degassing a polyester granulate, wherein the drying-/degassing device
a) is being configured in one piece as a container having a temperature-control zone arranged in the upper part and a cooling zone being configured in the lower part, or
b) is being configured in two pieces as a container for temperature-control and a separate subsequent cooling zone, the cooling zone communicating with the container for the temperature-control via a connection pipe,
the temperature-control zone or the container for temperature-control having an inlet for the polyester granulate arranged at the topside and the cooling zone having an outlet for the polyester granulate arranged at the bottom side,
**characterized in that**
the drying-/degassing device further has at least one removal possibility (14) for removing the temperature-controlled polyester granulate from the temperature-control zone, wherein the at least one removal possibility (14) is configured as
a) at least one outflow pipe arranged in throughflow direction in front of the cooling zone, the outflow pipe being connected to the interior of the temperature-control zone of the cylindrical container via the wall of the cylindrical container,
b) at least one, two or more pipes, preferably double-walled pipes which, the pipes being guided through the cooling zone starting from the temperature-control zone,
c) at least one annular gap which is configured vertically passing through the cooling zone, the annular gap enabling guidance of the polyester pellets from the temperature-control zone through the cooling zone,
d) at least one conveyor screw arranged in the throughflow direction in front of the cooling zone, the conveyor screw being connected to the interior of the temperature-control zone of the cylindrical container via the wall of the cylindrical container,
e) at least one outflow pipe communicating with the connection pipe, or
f) combinations of the previously mentioned possibilities.

2. Drying-/degassing device (7) according to claim 1, **characterised in that** the removal possibility (14) is thermally insulated.

3. Drying-/degassing device (7) according to one of the preceding claims, **characterised in that** the drying-/degassing device has a possibility (11) for guiding through gases counter-currently to the polyester granulate.

4. Method for the production of moulded articles from polyesters, in which
a) a polyester melt is granulated by means of an underwater granulator,
b) the granulate is separated from the cooling water, and also
c) it is being dried/degassed and/or postcondensed by means of a drying-/degassing device according to at least one of the claims 1 to 3
**characterised in that**
at least a part of the granulate which is dried/degassed and/or postcondensed in step c) is supplied to at least one moulding tool without further cooling and converted into a moulded article

5. Method according to claim 4, **characterised in that** during step c) the granulate is kept at a temperature of 100 to 200 °C, preferably 140 to 190 °C, particularly preferable of 160 to 180 °C.

6. Method according to one of the preceding claims, **characterised in that** during supply to the moulding tool the temperature of the polyester granulate is kept at ±50 °C, preferably ±30 °C, particularly preferred ±15 °C, relative to the granulate temperature during step c).

7. Method according to one of the claims 4 to 6, wherein the part of the polyester granulate which is not supplied to the moulding tool is cooled subsequent to step c).

8. Method according to the preceding claim, **characterised in that** the ratio of the granulate supplied to the moulding tool and of the cooled granulate is adjusted between 0.1 and 0.7, preferably between 0.3 and 0.5.

9. Method according to one of the claims 4 to 8, **characterised in that** it is carried out by means of a device which comprises:
a) an underwater granulator (1) for producing polyester granulate from a polyester melt,
b) a device (5, 16), which is arranged downstream the underwater granulator (1), for separating the polyester granulate produced by the underwater granulator (1) from the water,
c) an above-described drying-/degassing device (7) for drying and/or degassing the polyester granulate according to one of the preceding claims being arranged downstream the device (5, 16) for separating the polyester granulate,,
d) a transport device (17) for removing the polyester granulate from the drying-/degassing device (7), the transport device (17) being connected to the removal possibility (14) of the drying-/degassing device (7) for supplying the granulate to at least one
e) at least one moulding tool (18) for the producing moulded articles from the granulate.

10. Method according to claim 9, **characterised in that** the solid phase postcondensator is configured in two pieces and has a part for solid phase postcondensation of the polyester granulate and also a separate subsequent cooling zone, wherein the cooling zone communicates with the container for the solid phase postcondensation via a connection pipe, wherein the part for the solid phase postcondensation has an inlet for the polyester granulate and the cooling zone has an outlet for the polyester granulate, and the removal possibility is configured as at least one outflow pipe communicating with the connection pipe.

11. Method according to one of the preceding claims 9 or 10, **characterised in that** the solid phase postcondensator has a possibility for guiding through gases counter-currently to the polyester granulate.

12. Device according to one of the preceding claims 9 to 11, **characterised in that** the device (5, 16) for removing the polyester granulate produced by the underwater granulator from the water is configured as agitated centrifuge (5), which preferably has a possibility (16) for removing gases and/or volatile condensates by suction.

13. Method according to one of the preceding claims 9 to 12, **characterised in that** the transport device (15) is configured as pneumatic transport device or as a mechanical transport device, in particular as chain transport device or as conveyor screw.

## Revendications

1. Dispositif de séchage/dégazage (7) destiné au séchage et/ou au dégazage d'un granulé de polyester, le dispositif de séchage/dégazage étant configuré
a) en une pièce, en tant que récipient comportant une zone de mise en température, disposée dans la partie supérieure, et une zone de refroidissement, disposée dans la partie inférieure, ou
b) en deux parties, en tant que récipient destiné à la mise en température, suivies d'une zone de refroidissement distincte, la zone de refroidissement étant reliée au récipient destiné à la mise en température,
la zone de mise en température ou le récipient destiné à la mise en température disposant d'une entrée, disposée côté tête, pour le granulé de polyester, et la zone de refroidissement disposant d'une sortie, disposée côté fond, pour le granulé de polyester,
**caractérisé en ce que** le dispositif de séchage/dégazage présente en outre au moins une possibilité de prélèvement (14) destinée à prélever de la zone de mise en température le granulé de polyester mis en température, l'au moins une possibilité de prélèvement (14) étant formée
a) d'au moins un tuyau de décharge, disposé dans le sens de passage en amont de la zone de refroidissement, tuyau qui par l'intermédiaire de la paroi du récipient cylindrique est relié à l'intérieur de la zone de mise en température du récipient cylindrique,
b) d'au moins un, deux ou plus tuyaux, de préférence des tuyaux à double paroi, qui en partant de la zone de mise en température traversent la zone de refroidissement,
c) d'au moins une fente annulaire, configurée de façon à traverser verticalement la zone de refroidissement, fente qui permet un passage des pastilles de polyester à travers la zone de refroidissement, en provenance de la zone de mise en température,
d) d'au moins une vis transporteuse, disposée dans le sens de passage en amont de la zone de refroidissement, vis qui par l'intermédiaire de la paroi du récipient cylindrique est reliée à l'intérieur de la zone de mise en température du récipient cylindrique,
e) d'au moins un tuyau de décharge, qui est relié à la conduite de liaison, ou
f) de combinaisons des possibilités mentionnées ci-dessus.

2. Dispositif de séchage/dégazage (7) selon la revendication 1, **caractérisé en ce que** la possibilité de prélèvement (14) est thermiquement isolée.

3. Dispositif de séchage/dégazage (7) selon l'une des revendications précédentes, **caractérisé en ce que** le dispositif de séchage/dégazage présente une possibilité (11) destinée à faire passer des gaz à contre-courant par rapport au granulé de polyester.

4. Procédé de fabrication d'objets moulés à partir de polyesters, dans lequel
a) on granule une masse fondue de polyester à l'aide d'un granulateur sous l'eau,
b) on sépare le granulé de l'eau de refroidissement, ainsi que
c) on le sèche/le dégaze et/ou on le soumet à une post-condensation à l'aide d'un dispositif de séchage/dégazage selon l'une des revendications 1 à 3,
**caractérisé**
**en ce qu'**au moins une partie du granulé séché/dégazé et/ou soumis à une post-condensation dans l'étape c) est, sans refroidissement supplémentaire, envoyée à au moins un moule, et transformée en un objet moulé.

5. Procédé selon la revendication 4, **caractérisé en ce que** le granulé est, pendant l'étape c), maintenu à une température de 100 à 200 °C, de préférence de 140 à 190 °C, d'une manière particulièrement préférée de 160 à 180 °C.

6. Procédé selon l'une des deux revendications précédentes, **caractérisé en ce que** la température du granulé de polyester, lors de son amenée au moule, est maintenue à une température s'écartant de ± 50 °C, de préférence ± 30 °C, d'une manière particulièrement préférée ± 15 °C, de la température du granulé pendant l'étape c).

7. Procédé selon l'une des revendications 4 à 6, **caractérisé en ce que** la partie du granulé de polyester non amenée au moule est refroidie après l'étape c).

8. Procédé selon la revendication précédente, **caractérisé en ce que** le rapport entre le granulé amené au moule et le granulé refroidi est ajusté à une valeur comprise entre 0,1 et 0,7, de préférence entre 0,3 et 0,5.

9. Procédé selon l'une des revendications 4 à 8, **caractérisé en ce qu'**il est mis en oeuvre avec un dispositif comprenant :
a) un granulateur sous l'eau (1), destiné à produire un granulé de polyester à partir d'une masse fondue de polyester,
b) un dispositif (5, 16), disposé en aval du granulateur sous l'eau (1), destiné à séparer de l'eau le granulé de polyester produit par le granulateur sous l'eau (1),
c) en aval du dispositif (5, 16) destiné à séparer le granulé de polyester, un dispositif de séchage/dégazage (7) destiné au séchage et/ou au dégazage du granulé de polyester selon l'une des revendications précédentes,
d) un dispositif de transport (17), destiné à prélever le granulé de polyester du dispositif de séchage/dégazage (7), le dispositif de transport (17) étant relié à la possibilité de prélèvement (14) du dispositif de séchage/dégazage (7), pour amener le granulé
e) à au moins un moule (18) destiné à la fabrication d'objets moulés à partir du granulé.

10. Procédé selon la revendication 9, **caractérisé en ce que** le réacteur de post-condensation en phase solide est configuré en deux étapes, et présente une zone destinée à la post-condensation en phase solide du granulé de polyester, ainsi qu'une zone de refroidissement distincte, montée en aval, la zone de refroidissement étant par l'intermédiaire d'une conduite de liaison reliée au récipient destiné à la post-condensation en phase solide, la zone destinée à la post-condensation en phase solide présentant une entrée pour le granulé de polyester, et la zone de refroidissement présentant une sortie destinée au granulé de polyester, et la possibilité de prélèvement étant formée d'au moins un tuyau de décharge, qui est relié à la conduite de liaison.

11. Procédé selon l'une des revendications précédentes 9 ou 10, **caractérisé en ce que** le réacteur de post-condensation en phase solide présente une possibilité de passage de gaz à contre-courant du granulé de polyester.

12. Dispositif selon l'une des revendications précédentes 9 à 11, **caractérisé en ce que** le dispositif (5, 16) destiné à séparer de l'eau le granulé de polyester produit par le granulateur sous l'eau est configuré comme une centrifugeuse (5) munie d'un agitateur, qui de préférence présente une possibilité (16) destinée à l'aspiration de gaz et/ou de produits de condensation volatils.

13. Procédé selon l'une des revendications précédentes 9 à 12, **caractérisé en ce que** le dispositif de transport (15) est configuré comme un dispositif de transport pneumatique ou un dispositif de transport mécanique, en particulier comme un dispositif de transport à chaîne ou comme une vis transporteuse.
